**Europäisches Patentamt**

**European Patent Office**

**Office européen des brevets**

(11) Veröffentlichungsnummer: **0 203 309**
A2

## (12) EUROPÄISCHE PATENTANMELDUNG

(21) Anmeldenummer: 86104261.2

(22) Anmeldetag: 27.03.86

(51) Int. Cl.⁴: **H 02 G 3/06**, H 02 G 3/08

(30) Priorität: 04.04.85 DE 8510161 U

(43) Veröffentlichungstag der Anmeldung: **03.12.86**
**Patentblatt 86/49**

(84) Benannte Vertragsstaaten: **AT BE CH DE FR GB IT Li LU NL SE**

(71) Anmelder: **Siemens Aktiengesellschaft Berlin und München, Wittelsbacherplatz 2, D-8000 München 2 (DE)**

(72) Erfinder: **Nothnagel, Gerd, Geroltstrasse 56, D-8000 München 2 (DE)**
Erfinder: **Thomfohrde, Heiner, Flurstrasse 9, D-8021 Hohenschäftlarn (DE)**

(54) **Kabeleinführung in das Gehäuse eines Gerätes.**

㊗ Das Kunststoffgehäuse eines Bediengerätes für ein Funktelefon hat rückseitig an einer Gehäusekante scharnierartig bewegbare Kabeleinführungen, durch die flexible Kabel hindurchgeführt sind.

EP 0 203 309 A2

020330:9

Siemens Aktiengesellschaft

Berlin und München       -1-

Unser Zeichen

VPA  85 P 1215 E

## Kabeleinführung in das Gehäuse eines Gerätes

Die ~~Neuerung~~ Erfindung bezieht sich auf eine Kabeleinführung in das Gehäuse eines Gerätes der Nachrichtentechnik, insbesondere eines Bediengerätes für eine Funkeinrichtung.

Besonders bei den letzerwähnten Bediengeräten für Funkeinrichtungen besteht häufig das Bedürfnis, das Gerät in den verschiedensten Lagen betreiben zu können. Hierzu ist es notwendig, die meist rückseitig herausgeführten Kabel entsprechend biegbar auszuführen, was jedoch besonders bei häufigem Stellungswechsel des Bediengerätes zu Tragbrüchen führen kann.

Der ~~Neuerung~~ Erfindung liegt die Aufgabe zugrunde, eine Kabeleinführung anzugeben, bei der insbesondere letzterer Nachteil vermieden wird.

Bei einer Einrichtung der eingangs genannten Art wird diese Aufgabe neuerungsgemäß dadurch gelöst, daß sich an einer Gehäusekante ein scharnierartig bewegbares tonnenförmiges Teil befindet, das in einer passenden käfigförmigen Vertiefung der Gehäusekante  und durch das ein flexibles Kabel hindurchgeführt ist und das ferner durch einen Winkel abgedeckt ist, der mit einem über die Kante führenden, langlochförmigen Durchbruch für das Kabel versehen ist.

Weitere vorteilhafte Ausgestaltungen der ~~Neuerung~~ Erfindung finden sich in den Unteransprüchen.

Nachstehend wird die ~~Neuerung~~ Erfindung anhand von Figuren näher erläutert.

Gz 1 Buh / 04.04.85

Die Fig. 1 zeigt die Rückseite des Gehäuses samt den Kabeleinführungen, teilweise in Explosivdarstellung.

Die Fig. 2 zeigt das Ganze mit Blick von der Vorderseite in das Gehäuse.

In einem Gehäuse 8, das in diesem Fall als Bedienpult eines Funkgerätes bei einem Funktelefonsystem ausgebildet ist, befinden sich rückseitig Kabeleinführungen, die schwenkbar gelagert sind. Der Schwenkmechanismus besteht dabei aus einem tonnenförmigen Teil 1, durch das ein flexibles Kabel 4 hindurchgeführt ist. An das tonnenförmige Element ist zum Außenraum hin das Kabel von einer Kabeltülle 7 umfangen. Zum Innenraum hin ist das Kabel in Einzeladern 9 aufgespleißt. Das Kabel kann an dieser Stelle natürlich zunächst auch durchgeführt sein.

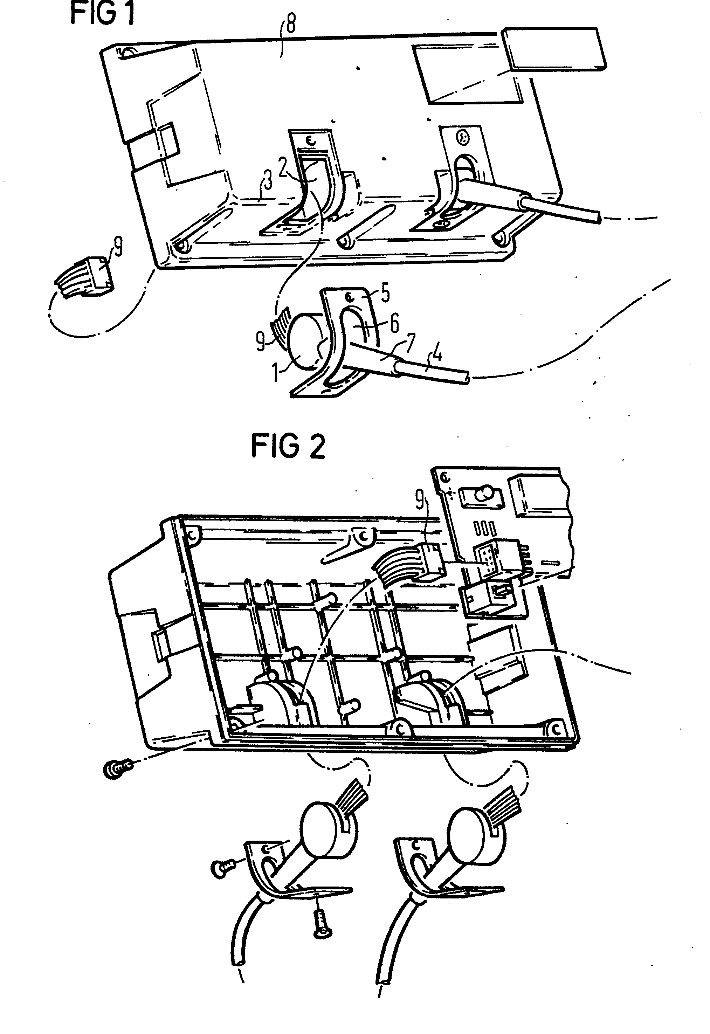

Das tonnenförmige Element ist an einer der Gehäusekanten auf der Geräterückseite in einer passenden käfigförmigen Vertiefung 2 drehbar gelagert. Gegen Herausfallen aus dem Gehäuse ist es durch einen Winkel 5 gesichert, der zur Kabeldurchführung ein sich über die Gehäusekante erstreckendes Langloch 6 hat. Dieser Winkel 5 ist mit dem Gehäuse vorzugsweise verschraubbar. Die flexiblen Kabel 4 können im Außenraum zu entsprechenden Steckern oder Buchsenelementen führen. Im Innenraum können ebenfalls, wie in Fig. 2 angedeutet, Steckelemente 9 an den Enden der aufgespleißten Kabelseelen angeordnet sein.

Besonders dann, wenn die Kabeltülle fest mit dem tonnenförmigen Teil 1, z.B. als Spritzgußteil ausgeführt, verbunden ist, kann ein Kabelbruch auch bei mehrfacher Lagenänderung des Gehäuses, wie es beispielsweise bei solchen Bediengeräten häufig gefordert wird, kaum mehr erfolgen.

Das Gehäuse kann so in stehender Ausführung oder im Einbauzustand oder auch im ständig bewegbaren Zustand in der Art eines Handapparates verwendet werden, wobei sich der Abbiegewinkel des Kabels gegenüber dem Gehäuse leicht ändern kann. Soll das Kabel insbesondere in vertikaler oder horizontaler Richtung vom Gehäuse abgeführt werden, so können in den das Gelenk bildenden Teilen 1 und 2 auch Rasterungen für die gewünschten Vorzugsrichtungen angebracht werden.

5 Patentansprüche
2 Fig.

## Patentansprüche

1. Kabeleinführung in das Gehäuse eines Gerätes der Nachrichtentechnik, insbesondere eines Bediengerätes für eine Funkeinrichtung,
d a d u r c h   g e k e n n z e i c h n e t ,
daß sich an einer Gehäusekante (3) ein scharnierartig bewegbares tonnenförmiges Teil (1) befindet, das in einer passenden käfigförmigen Vertiefung (2) der Gehäusekante (3) und durch das ein flexibles Kabel (4) hindurchgeführt ist und das ferner durch einen Winkel (5) abgedeckt ist, der mit einem über die Kante führenden, langlochförmigen Durchbruch (6) für das Kabel (4) versehen ist.

2. Kabeleinführung nach Anspruch 1,
d a d u r c h   g e k e n n z e i c h n e t ,
daß das Kabel gegen den Außenraum des Gehäuses von einer Kabeltülle (7) umgeben ist, die vorzugsweise mit dem tonnenförmigen Teil (1) zusammen ein Kunststoffspritzteil bildet.

3. Kabeleinführung nach einem der vorhergehenden Ansprüche,
d a d u r c h   g e k e n n z e i c h n e t ,
daß die Kanten des vorzugsweise aus Kunststoff bestehenden Gehäuses (8) gerundet sind und die Kabeldurchführung an der rückseitigen unteren Gehäusehaube angeordnet ist.

4. Kabeleinführung nach einem der vorhergehenden Ansprüche,
d a d u r c h   g e k e n n z e i c h n e t ,
daß das Kabel im Gehäuseinnenraum nach der Durchführung in seine Einzeladern aufgespleißt ist.

5. Kabeleinführung nach einem der vorhergehenden Ansprüche,

d a d u r c h   g e k e n n z e i c h n e t ,

daß das scharnierartige Element (1) zusammen mit seiner käfigförmigen Halterung (2) mit Raststellungen versehen ist.

**FIG 1**

**FIG 2**